# EUROPEAN PATENT APPLICATION

(11) **EP 1 933 449 A1**
(43) Date of publication of application: **18.06.2008**
(21) Application number: 07019916.1
(22) Date of filing: 11.10.2007
(51) Int. Cl.: H02M 7/12, H02M 7/155, H02M 7/162

(54) **Motor drive apparatus**

(30) Priority: 29.11.2006 JP 2006321158
(71) Applicant: FANUC LTD, Minamitsuru-gun, Yamanashi 401-0597 (JP)
(72) Inventor: Matsubara, Shunsuke, Minamitsuru-gun Yamanashi 401-0597 (JP); Yaeshima, Mamoru, Minamitsuru-gun Yamanashi 401-0597 (JP); Yamada, Yuuichi, Minamitsuru-gun Yamanashi 401-0597 (JP); Hanyu, Shigeki, Minamitsuru-gun Yamanashi 401-0597 (JP); Shirouzu, Masatomo, Minamitsuru-gun Yamanashi 401-0597 (JP)
(74) Representative: Thum, Bernhard

(57) **Abstract**

A motor drive apparatus used for an industrial machine, comprising a converter (4) for converting an AC voltage supplied from an external power source to DC voltage, a capacitor bank (7) connected to the output of the converter (4), and a control apparatus (8) stopping the functions of the capacitor bank when detecting an abnormality of the capacitor bank, whereby the safety of the motor drive apparatus when an abnormality occurs in the capacitor bank is secured by building into the capacitor bank a circuit or function for protecting the capacitor bank and motor drive apparatus and whereby electric shock is prevented even when a person mistakenly touches the capacitor bank when the capacitor bank stores a charge.

## Description

### CROSS-REFERENCE TO RELATED APPLICATIONS

This application is based upon and claims a priority of Japanese Patent Application No. 2006-321158, filed November 29, 2006, the contents being incorporated herein by reference.

### BACKGROUND OF THE INVENTION

### 1. Field of the Invention

The present invention relates to a motor drive apparatus, more particularly relates to a motor drive apparatus charging capacitors with energy generated at the time of motor regeneration and provided with a control apparatus for securing safety for a capacitor bank reutilized at the time of motor running.

### 2. Description of the Related Art

In the past, a capacitor bank was just connected to a motor drive apparatus in parallel. In particular, there was never any motor drive apparatus provided with a control apparatus for securing safety for the capacitor bank. As a prior art document in this field, Japanese Patent Publication (A) No. 2003-333891 is known.

### SUMMARY OF THE INVENTION

An object of the present invention is to provide a motor drive apparatus in which the safety of the motor drive apparatus when an abnormality occurs in a capacitor bank is secured by building into the capacitor bank a circuit or function for protecting the capacitor bank and motor drive apparatus.

Another object of the present invention is to prevent electric shock even when a person mistakenly touches the capacitor bank when the capacitor bank stores a charge (energy).

According to the present invention, there is provided a drive apparatus for a motor used in an industrial machine, which motor drive apparatus comprises a converter for converting AC voltage supplied from an external power source to DC voltage, a capacitor bank connected to the output of the converter, and a control apparatus for stopping the function of the capacitor bank when detecting an abnormality in the capacitor bank.

By stopping the function of the capacitor bank when detecting an abnormality in the capacitor bank, the danger of the capacitor bank to the human body can be avoided.

### BRIEF DESCRIPTION OF THE DRAWINGS

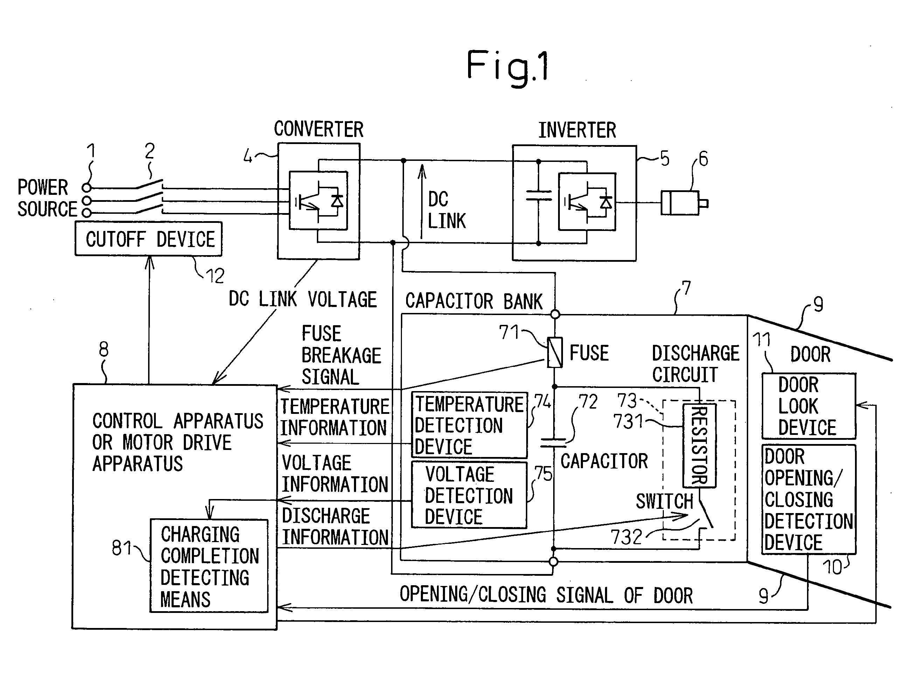

The above object and features of the present invention will be more clearly understood by reading the best mode for carrying out the invention below explained with reference to the attached drawings, wherein
FIG. 1 is a circuit diagram showing the configuration of a motor drive apparatus according to an embodiment of the present invention

### DESCRIPTION OF THE PREFERRED EMBODIMENTS

FIG. 1 is a circuit diagram showing the configuration of a motor drive apparatus according to an embodiment of the present invention. This motor drive apparatus is used for a power press or other forge rolling machine, an injection molding machine, industrial robot, or other industrial machine. In the figure, 1 indicates input terminals of three-phase AC power supplied from an external power source, 2 switches, 4 a converter for converting an alternating current to a direct current, 5 an inverter for converting a direct current to a required AC voltage, 6 a driven apparatus, 7 a capacitor bank, 8 a control apparatus, 9 a door of a capacitor bank, 10 a door opening/closing detection device, 11 a door lock device, and 12 a cutoff device.

The capacitor bank 7 is provided with a fuse 71 connected to one of the DC links of the output of the converter 4, one or more capacitors 72 connected between the fuse 71 and the DC link, a discharge circuit 73 connected in parallel with the capacitors 72, a temperature detection device 74 for detecting the temperature inside the capacitor bank 7, and a voltage detection device 75 for detecting the voltage applied to the capacitor bank 7.

The discharge circuit 73 is comprised of a circuit of a resistor 731 and a switch 732 connected in series. The control apparatus 8 is provided with a charging completion detecting means 81 for judging if the capacitor bank 7 is in a charge completed state based on the voltage information output from the voltage detection device 75.

Next, the operation of the motor drive apparatus shown in FIG. 1 will be explained.

### First Example

In the first example, when the control apparatus 8 detects an abnormality of the capacitor bank 7, it stops the functions of the capacitor bank 7.

In a first aspect of the first example, the control apparatus 8 controls the cutoff device 12 to cut off the input power to the converter 4 when it detects an abnormality of the capacitor bank 7.

In a second aspect of the first example, the control apparatus 8 controls the cutoff device 12 to cut off input power to the converter 4 in accordance with a fuse breakage signal detecting that the fuse 71 inside the capacitor bank 7 has broken.

In a third aspect of the first example, the control apparatus 8 controls the cutoff device 12 to cut off input power to the converter 4 when the temperature detected by a temperature detection device 74 inside the capacitor bank 7 has become a predetermined temperature.

In a fourth aspect of the first example, the control apparatus 8 controls the cutoff device 12 to cut off input power to the converter 4 when the door opening/closing detection device 10 detects the opening of the door 10.

### Second Example

In the second example, the control apparatus 8 causes the capacitor bank 7 to discharge when detecting an abnormality of the capacitor bank 7.

In a first aspect of the second example, the control apparatus 8 sends a discharge signal to the switch 732 in accordance with a fuse breakage signal detecting that the fuse 71 has been broken and thereby turns the switch 732, whereby the capacitors 72 start to discharge.

In a second aspect of the second example, the control apparatus 8 sends a discharge signal to the switch 732 in accordance with the temperature information output from the temperature detection device 74 when the temperature detected by the temperature detection device 74 becomes a predetermined temperature, whereby the switch 732 is turned on and thereby the capacitors 72 are discharged.

### Third Example

In the third example, the control apparatus 8 is provided with a charging completion detecting means for detecting if the capacitor bank is being charged based on voltage information output from a voltage detection device 75 inside the bank. The capacitor bank 7 controls the door lock device 11 to close and fasten the door 9 of the box housing the capacitor bank 7 when the charging completion detecting means finds that the capacitor bank 7 has finished being charged.

According to the present invention, when an abnormality of the capacitor bank is detected, the function of the capacitor bank is stopped, so the safety of the motor drive apparatus is secured.

Further, when an abnormality of the capacitor bank is detected, even if the capacitor bank stores a charge (energy), it is possible to avoid a person mistakenly being given an electric shock by touching the capacitor bank by discharging the capacitor bank or by closing a door of a capacitor bank.

While the invention has been described with reference to specific embodiments chosen for purpose of illustration, it should be apparent that numerous modifications could be made thereto by those skilled in the art without departing from the basic concept and scope of the invention.

## Claims

1. A motor drive apparatus used in an industrial machine, which motor drive apparatus comprises a converter for converting AC voltage supplied from an external power source to DC voltage, a capacitor bank connected to the output of the converter, and a control apparatus for stopping the function of the capacitor bank when detecting an abnormality in the capacitor bank.

2. A motor drive apparatus as set forth in claim 1, wherein said control apparatus cuts off input power to said converter when detecting an abnormality of said capacitor bank.

3. A motor drive apparatus as set forth in claim 2, wherein said capacitor bank comprises a fuse, and said control apparatus cuts off said input power in accordance with a fuse breakage signal detecting that the fuse is broken.

4. A motor drive apparatus as set forth in claim 2, wherein said capacitor bank has built into it a temperature detection device for detecting the temperature of said capacitor bank, and said control apparatus cuts off said input power when the temperature detected by said temperature detection device becomes a predetermined temperature.

5. A motor drive apparatus as set forth in claim 2, further comprising a door opening/closing detection device for detecting opening/closing of the door of said capacitor bank, said control apparatus cutting off said input power when said door opening/closing detection device detects that said door is open.

6. A motor drive apparatus as set forth in claim 1, wherein said control apparatus causes said capacitor bank to discharge when detecting an abnormality in said capacitor bank.

7. A motor drive apparatus as set forth in claim 6, wherein said capacitor bank comprises a fuse and said control apparatus discharges said capacitor bank in accordance with a fuse breakage signal detecting that said fuse has broken.

8. A motor drive apparatus as set forth in claim 6, wherein said capacitor bank has a temperature detection device for detecting the temperature inside the capacitor bank built into it and said control apparatus discharges said capacitor bank when the temperature detected by said temperature detection device becomes a predetermined temperature.

9. A motor drive apparatus as set forth in claim 1, wherein said control apparatus is provided with a charge completion detecting means for detecting if said capacitor bank is being charged and said capacitor bank is provided with a door lock device for closing and fastening the door of a box storing said capacitor bank when the charge completion detecting means finds that said capacitor bank has finished being charged.
